# EUROPEAN PATENT APPLICATION

(11) **EP 1 881 493 A1**
(43) Date of publication of application: **23.01.2008**
(21) Application number: 07013972.0
(22) Date of filing: 17.07.2007
(51) Int. Cl.: G11B 7/0065, G11B 7/09, G11B 7/125, G11B 7/08

(54) **Information recording/reproducing device and information reproducing method**

(30) Priority: 19.07.2006 JP 2006196766
(71) Applicant: FUJIFILM Corporation, Minato-ku Tokyo 106-8620 (JP)
(72) Inventor: Sasaki, Toshio, Ashigarakami-gun Kanagawa (JP)
(74) Representative: Grünecker, Kinkeldey, Stockmair & Schwanhäusser Anwaltssozietät

(57) **Abstract**

In an information recording/reproducing device (10), pattern images of information light and reference light are formed by a micromirror device (27) to produce the information light and the reference light, which have a coaxial relationship. The information light and the reference light are condensed by an objective lens (34) and are recoded in a recording medium (11) as interference fringes. Information light is reproduced from the recording medium in which interference fringes are recoded in advance. As to the reproduced information light, density of the pattern image thereof is calculated. A pattern-image forming-position adjuster (46) changes a position of the pattern image of the reference light, which is formed on the micromirror device, by a predetermined number of pixels to determine the position from which the best reproduction pattern image is obtained.

## Description

### FIELD OF THE INVENTION

The present invention relates to an information recording/reproducing device and an information reproducing method for reproducing information light from recorded interference fringes in which reference light and the information light produced from a two-dimensional pattern image interfere with each other.

### BACKGROUND OF THE INVENTION

There is a remarkable information recording/reproducing device using a holographic data memory as a high-capacity recording medium (see Japanese Patent Laid-Open Publication Nos. 2006-99880 and 2006-228875, for instance). The holographic data memory as the recording medium records interference fringes in which information light and reference light interfere with each other. The information light is produced from a pattern image of a binary image. In this regard, digital information is patterned as the binary image. It is possible to reproduce the information light by applying the reference light to the interference fringes. The pattern image of the reproduced information light is detected by an image sensor and the digital information is restored from the detected pattern image.

A recording/reproducing device of a colinear holography method is capable of extremely downsizing an interference optical system and is considered as a practical system. In this method, a micromirror device is employed to form a reference-light pattern image of a ring shape and an information-light pattern image located at a central portion of the reference-light pattern image. Moreover, reference light and information light advancing in coaxial optical paths are produced. The reference light and the information light are condensed in a spot shape by an objective lens confronting the recording medium. The reference light and the information light interfere with each other when condensed by the objective lens. And then, three-dimensional interference fringes are recorded in a recording layer of the recording medium.

A reference pit for defining a recording position of the interference fringes is formed in the recording medium of the interference fringes to be recorded. Pit readout light used for reading the pit has a wavelength different from those of the information light and the reference light. The recording layer of the interference fringes is made of a material having no photosensitivity relative to the pit readout light. By reading the pit of the recording medium, the recording position of the interference fringes is detected. Further, by properly changing the pattern image of the information light in accordance with the recording position, it is possible to record the interference fringes in order.

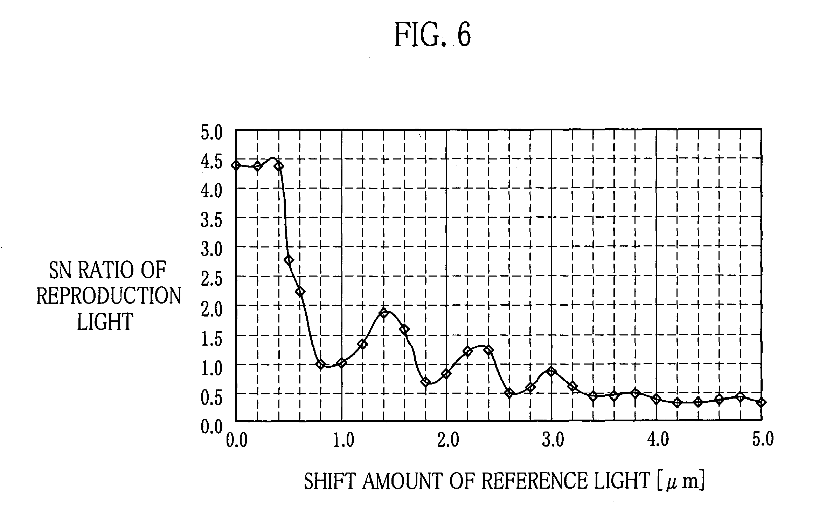

Pit information of the recording medium is also read out at a reproduction time to correctly apply the reference light to the recording position of the interference fringes. Intensity of the reproduced information light considerably deteriorates due to slight shift of the application position of the reference light. For example, as shown in Fig. 6, an SN ratio of the reproduced information light (reproduction light) reduces roughly in half when the reference light shifts by 0.5 µm. The SN ratio further deteriorates when the shift of the reference light exceeds 0.5 µm. By utilizing this property, it is possible to reproduce the information light if multiple recording is performed so as to partially overlap the interference fringes. Thus, recording density can be improved.

However, when recording the interference fringes and reproducing the information light are performed by different devices, slight displacement of the pit readout light exists between both the devices and this slight displacement causes the application position of the reference light to shift. Due to this, there arises a problem in that reproduction intensity of the information light is significantly lowered. In other words, unless the positional relationship of the reference light and the pit readout light is kept to the above-mentioned accuracy of 0.5 µm or less, it is impossible to secure reproduction compatibility relative to plural devices. Obtaining such a high accuracy by adjusting positions of a light source and optical members is a difficult operation requiring a great deal of effort.

### SUMMARY OF THE INVENTION

In view of the foregoing, it is a main object of the present invention to provide an information recording/reproducing device and an information reproducing method in which positional adjustment of reference light and pit readout light is easily performed and information light is smoothly reproduced.

In order to achieve the above and other objects, the information recording/reproducing device according to the present invention comprises a light-source unit, a spatial light modulator, a recorder, a reproducer, a reproduction pattern-image detector and an adjuster. The spatial light modulator modulates the light of the light-source unit every pixel. The spatial light modulator has an image forming surface on which two-dimensional pattern images including pattern images for information light and reference light are formed. The light of the light-source unit is modulated on the basis of the formed pattern images. The recorder records interference fringes in a recording medium. The interference fringes are caused by condensing the coaxial information light and reference light produced from the pattern images and by making the information light and the reference light interfere with each other. The reproducer reproduces the information light by applying the reference light based on the pattern image thereof, which is formed on the image forming surface of the spatial light modulator, to either one of the interference fringes, one of which is recorded by the recorder and the other of which is recorded by another information recording/reproducing device. The reproduction pattern-image detector detects the reproduced information light as a reproduction pattern image. The adjuster adjusts an application position of the reference light relative to the recording medium by changing a position of the pattern image of the reference light, which is formed on the image forming surface, on the basis of contrast of the reproduction pattern image detected by the reproduction pattern-image detector.

Moreover, the position of the pattern image of the information light is changed in accordance with the positional change of the pattern image of the reference light to reflect the adjustment, which has been performed at the reproduction time of the information light, at a recording time.

The information reproducing method of the present invention comprises the steps of detecting the reproduced information light as the reproduction pattern image, changing the position of the pattern image of the reference light formed on the image forming surface on the basis of the contrast of the reproduction pattern image, and adjusting the application position of the reference light relative to the recording medium. These steps are performed while the reference light is applied to the recording medium to reproduce the information light from the interference fringes.

According to the present invention, the position for forming the pattern image of the reference light is changed in units of pixels. In virtue of this, it is possible to adjust the application position of the pit readout light relative to the application position of the reference light. For example, if a flux of the information light and the reference light is condensed by a lens into a spot having twentieth part of its diameter, a shift allowable range of the application position of the reference light regarding a surface of the recording medium becomes twenty times at a front side of the lens. In other words, the shift of 0.5 µm to be caused on the surface of the recording medium is allowed up to a shift of 10 µm at the front side of the lens. Thus, if the pixel of the pattern image of the reference light has one side set to 10 µm, it is possible to adjust the application position of the reference light on the recording medium in units of 0.5 µm when the position of the pattern image of the reference light is shifted one pixel by one pixel. The forming position of the pattern image is easily changed by electric processing of an image signal so that reproduction compatibility is easily secured.

### BRIEF DESCRIPTION OF THE DRAWINGS

Fig. 1 is a schematic illustration showing a structure of an information recording/reproducing device;
Fig. 2 is a section view showing a structure of a recording medium;
Fig. 3 is an illustration showing pattern images for producing information light and reference light;
Fig. 4 is a schematic illustration showing shifts of the pattern image of the reference light;

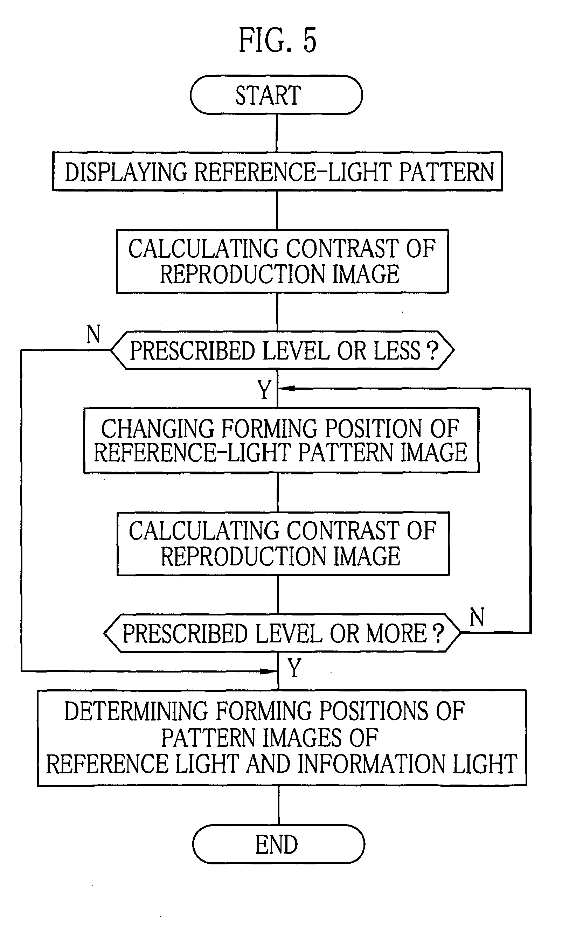

Fig. 5 is a flowchart showing procedure of adjustment; and
Fig. 6 is a graph showing a change of intensity of the information light in accordance with a shift amount of an application position of the reference light.

### DESCRIPTION OF THE PREFERRED EMBODIMENTS

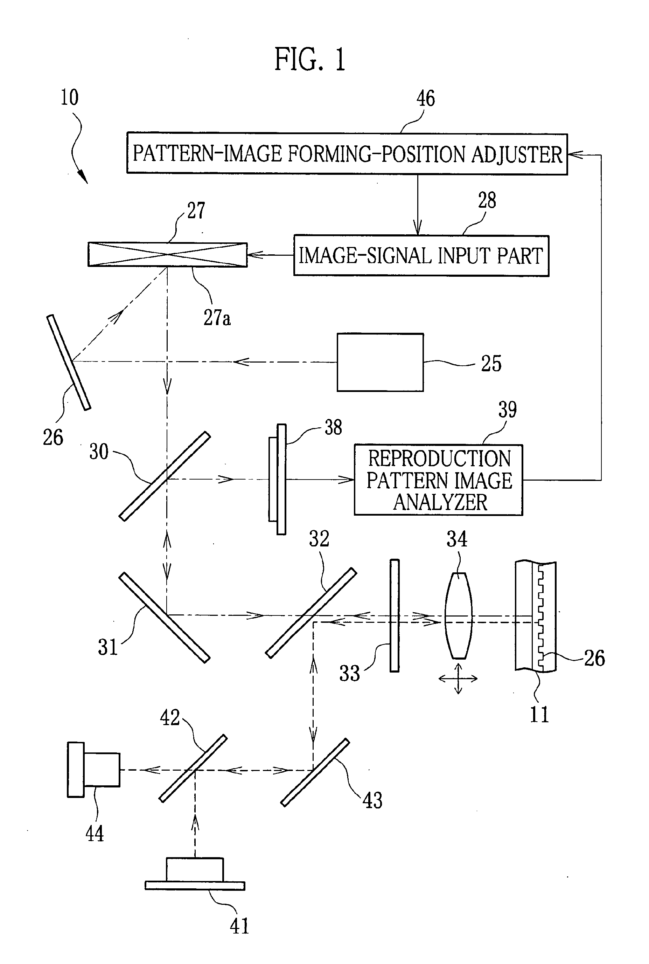

In Fig. 1, an information recording/reproducing device 10 causes information light and reference light to interfere with each other and records interference fringes in a photosensitive recording medium 11. To the information light, is given information of a pattern image formed from digital information as a binary image. To the reference light, information of a predetermined pattern image is given. In addition, the information recording/reproducing device 10 applies the reference light, which has the information of the predetermined pattern image identical with that of the recording time, to the interference fringes recorded in the recording medium 11 to reproduce the information light.

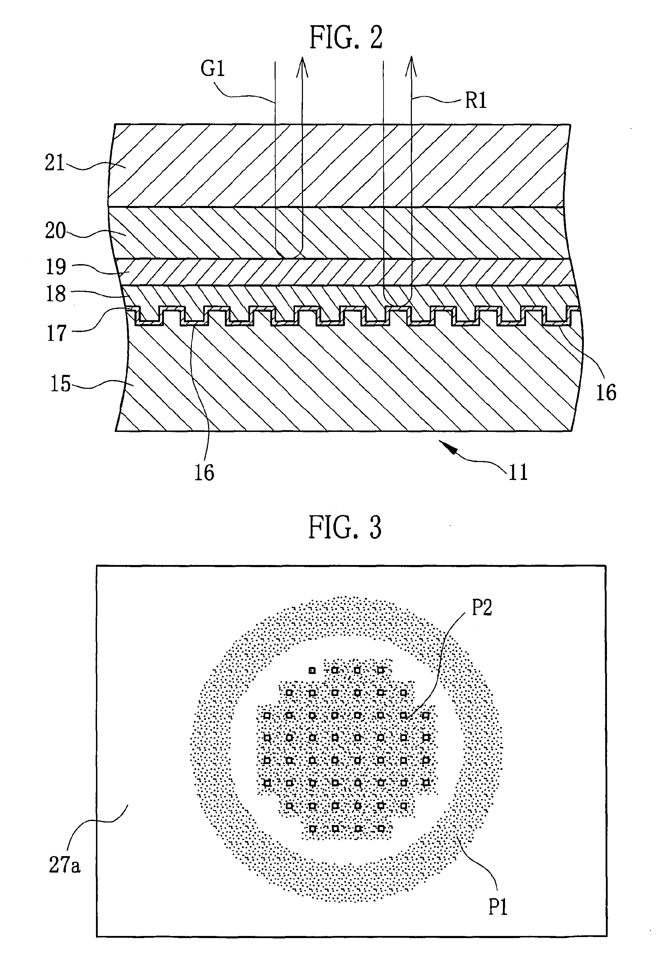

In Fig. 2, the recording medium 11 is a disk-shaped medium in which servo information and positioning information are prerecorded in a disk substrate 15 as emboss pits 16. The servo information is used for tracking servo control and focus servo control. The positioning information is used for determining a recording position of the interference fringe. The recording medium 11 is provided with a reflecting layer 17, a gap layer 18, a wavelength-selective reflecting layer 19, a recording layer 20 and a protective layer 21, which are formed in this order from the disk substrate 15. The reflecting layer 17 improves reflectance of pit readout light used for reading the emboss pit 16. The wavelength-selective reflecting layer 19 reflects green light G1 and transmits red light R1. The green light G1 is used as record/reproduction light for recording the interference fringes in the recording layer 20 and for reproducing the information light from the recorded interference fringes. The red light R1 is used as the pit readout light for reading the emboss pit 16. The recording layer 20 has photosensitivity relative to the green light G1 and has non-photosensitivity relative to the red light R1. The recording layer 20 is made of, for instance, photopolymer changing optical properties of refractive index, permittivity, reflectance and so forth in accordance with intensity of light having photosensitive wavelength.

In Fig. 1, the information recording/reproducing device 10 comprises a first light-source unit 25, a reflective mirror 26 and a micromirror device 27 working as a spatial light modulator. The first light-source unit 25 includes a laser source, a polarization converter and a collimator. The laser source emits a green laser beam having a single wavelength of 532nm, for example. The polarizing converter converts the emitted green laser beam into linear polarized light of P-polarization. The collimator converts the laser beam, a polarization plane of which is regulated by the polarizing converter, into parallel flux of a predetermined diameter in accordance with a surface size of the micromirror device 27. The reflective mirror 26 reflects the green light emitted from the first light-source unit 25 to make the reflected light enter the micromirror device 27 obliquely.

The micromirror device 27 comprises an image forming surface 27a provided with a large number of mirror elements, which compose pixels for forming a two-dimensional pattern image and are arranged in matrix. An image-signal input part 28 inputs an image signal of the pattern image into the micromirror device 27. The pattern image is patterned on digital information as a binary image. Inclination of each mirror element of the micromirror device 27 is electrically controlled on the basis of the inputted image signal. The inclination of each mirror element is changed between an on-position where the incident light is reflected in a normal direction of the image forming surface 27a to display white, and an off-position where the incident light is reflected in the other direction to display black. In virtue of this, brightness information of white pixel and black pixel is given to the light emitted from the first light-source unit 25.

In Fig. 3, a reference-light pattern image P1 and an information-light pattern image P2 are formed on the image forming surface 27a. The pattern image P1 has a ring shape and is a predetermined fixed pattern image. The pattern image P2 is located at a central portion of the pattern image P1 and represents contents of the recorded digital information. The micromirror device 27 modulates the light of the first light-source unit 25 every pixel on the basis of the reference-light pattern image P1 and the information-light pattern image P2 to produce the reference light and the information light. The produced reference light and the produced information light become fluxes advancing in coaxial optical paths. The image forming surface 27a of the micromirror device 27 has a rectangular shape. As to a size of the reference-light pattern image P1, a diameter thereof is smaller than a length of a short side of the image forming surface 27a, and the pattern image P1 has spaces at four end sides of the image forming surface 27a.

In Fig. 1, a first polarization beam splitter 30, a reflective mirror 31, a dichroic mirror 32, a quarter-wave plate 33 and an objective lens 34 are disposed along an optical path of the reference light and the information light emitted from the micromirror device 27. The first polarization beam splitter 30 transmits the incident light of P-polarization and reflects the incident light of S-polarization. The reference light and the information light emitted from the micromirror device 27 are of P-polarization and pass through the first polarization beam splitter 30. The dichroic mirror 32 transmits the green light G1 and reflects the red light R1. The reference light and the information light of the green light G1 pass through the dichroic mirror 32.

The quarter-wave plate 33 converts the incident light of linear polarization into circularly-polarized light. The linearly-polarized light advancing from the micromirror device 27 toward the recording medium 11 passes through the quarter-wave plate 33 one time, and then, is reflected by the recording medium 11 to enter the quarter-wave plate 33 again. As to the linearly-polarized light passing through the quarter-wave plate 33 two times in opposite directions along the identical optical pass, a polarization plane thereof rotates by 90 degrees. The objective lens 34 condenses the information light and the reference light, and makes them interfere with each other to produce interference fringes on the recording layer 20 of the recording medium 11. On the basis of servo information obtained by reading the emboss pit 16, tracking control and focus servo control of the objective lens 34 are performed. Further, the objective lens 34 is driven in an optical-axis direction and in a perpendicular direction thereto by receiving drive force of an actuator and so forth.

When the reference light for reproduction is applied to the interference fringes recorded in the recording layer 20 and the information light is reproduced from the interference fringes, a CMOS image sensor 38 detects the reproduced information light as a two-dimensional reproduction pattern image. In this regard, the reproduced information light has been converted into the S-polarized light by the quarter-wave plate 33. Therefore, the reproduced information light is reflected by the first polarization beam splitter 30 to enter the CMOS image sensor 38. A reproduction pattern image analyzer 39 decodes the detected reproduction pattern image to restore the digital information. In addition, the reproduction pattern image analyzer 39 calculates contrast of the reproduction pattern image on the basis of brightness information thereof. The contrast of the reproduction pattern image acts as a parameter for judging whether the information light is properly reproduced or not.

A second light-source unit 41 emits the red light R1, a wavelength of which is different from the first light-source unit 25, as pit readout light. The second light-source unit 41 includes a laser source and a polarization converter. The laser source emits a red laser beam having a wavelength of 655nm, for example. The polarization converter converts the red laser beam into polarized light of S-polarization. The pit readout light emitted from the second light-source unit 41 is reflected by a second polarization beam splitter 42. The pit readout light reflected by the second polarization beam splitter 42 enters the dichroic mirror 32 via a reflective mirror 43. Since the dichroic mirror 32 reflects the pit readout light of the red light, the pit readout light is synthesized with the information light and the reference light. The pit readout light advances toward the recording medium 11 in the optical path identical with that of the information light and the reference light.

The pit readout light is condensed by the objective lens 34 and enters the recording medium 11. The pit readout light is reflected by the reflecting layer 17 wherein the emboss pit is formed. And then, the pit readout light is returned to the same optical path through which the pit readout light has entered the recording medium 11. Since the pit readout light passes through the quarter-wave plate 33 two times, a polarization plane thereof rotates by 90 degrees. In virtue of this, the pit readout light passes through the second polarization beam splitter 42 and reaches a photodetector 44**,** which detects the pit readout light returned from the recording medium 11 to produce an electrical signal. This electrical signal includes servo information for performing servo control of the objective lens 34, and positional information for detecting the recording position of the interference fringes.

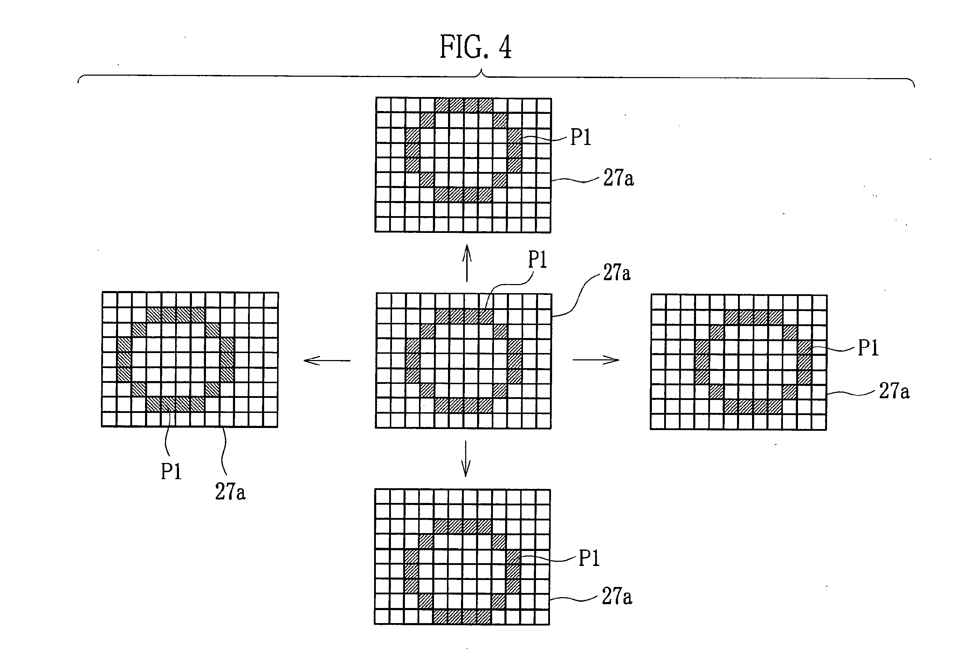

On the basis of the contrast of the reproduction pattern image calculated by the reproduction pattern image analyzer 39, a pattern-image forming-position adjuster 46 judges whether or not the reference light for reproduction is correctly applied to the interference fringes. When the reference light is not applied to the correct position, an instruction is sent to the image-signal input part 28 to change the position of the reference-light pattern image P1 formed on the image forming surface 27a of the micromirror device 27, such as shown in Fig. 4. Regarding the image signals to be inputted into the micromirror device 27, the reference-light pattern image P1 is shifted on the image forming surface 27a one pixel by one pixel. When the position of the reference-light pattern image P1 is changed, the application position of the reference light is changed and a positional relationship of the reference light and the pit readout light is relatively changed.

Next, positional adjustment of the information light, the reference light and the pit readout light is described below. At a time of manufacturing the information recording/reproducing device 10, the reference recording medium 11 in which interference fringes are recorded in advance is used for performing a reproduction test. In the information recording/reproducing device 10 to be adjusted, the reference-light pattern image **P1** is formed on the image forming surface 27a of the micromirror device 27. The reference-light pattern image P1 is initially formed at the center of the image forming surface 27a. When the reference light is applied to the recording medium 11 and the information light is reproduced from the interference fringes, the CMOS image sensor 38 detects the reproduction pattern image and the reproduction pattern image analyzer 39 calculates the contrast of the reproduction pattern image.

The pattern-image forming-position adjuster 46 judges whether or not the calculated contrast of the reproduction pattern image satisfies a prescribed level. When the reproduction pattern image satisfies the prescribed level, adjustment is judged to be unnecessary. In contrast, when the reproduction pattern image does not satisfy the prescribed level, the pattern-image forming-position adjuster 46 sends the instruction to the image-signal input part 28 to input the image signal, by which the position of the reference-light pattern image P1 is changed, into the micromirror device 27. For example, the reference-light pattern image P1 is formed on the image forming surface 27a at the respective positions shifted in vertical and horizontal directions by one pixel. The CMOS image sensor 38 detects the four reproduction pattern images in which the reference-light pattern image P1 is shifted in the respective directions, and the reproduction pattern image analyzer 39 calculates the contrast of the respective four reproduction pattern images.

From among the respective reproduction pattern images changing the position of the reference-light pattern image P1 in four ways, the pattern-image forming-position adjuster 46 specifies the reproduction pattern image from which the best contrast is obtained. Then, the pattern-image forming-position adjuster 46 judges whether or not the contrast of the specified reproduction pattern image satisfies the prescribed level. When the contrast of the reproduction pattern image satisfies the prescribed level, it is judged that the position of the current reference-light pattern image P1 is proper, and then, the adjustment is terminated. In contrast, when the reproduction pattern image having the contrast satisfying the prescribed level is not obtained, the position of the reference-light pattern image P1 is further changed. For example, the position of the reference-light pattern image P1 is vertically and horizontally changed by two pixels or is obliquely changed. Similarly to the above, the reproduction pattern image P1 from which the best contrast is obtained is specified, and it is judged whether or not the obtained contrast satisfies the prescribed level.

In the information recording/reproducing device 10 for which the adjustment has been performed, the reference-light pattern image P1 is formed at a position shifted from the initial central position of the image forming surface 27a by a predetermined number of pixels. Obtainment of the reproduction pattern image satisfying the contrast of the prescribed level means that the positional relationship of the pit readout light and the reference light is uniformed relative to the other information recording/reproducing device in which the recording medium 11 for reproduction test has been produced. Incidentally, since the center of the information-light pattern image P2 is identical with that of the reference-light pattern image P1, the position of the information-light pattern image P2 is also shifted by the same amount as the reference-light pattern image P1. In virtue of this, the position for recoding the interference fringe coincides with the position for reproducing the information light. Thus, it is possible to secure reproduction compatibility of the information recoding/reproducing device 10.

In the above embodiment, the micromirror device is used as a spatial light modulator for forming the two-dimensional pattern image. Instead of this, it is possible to use a liquid-crystal display panel, a magneto-optical modulator and so forth. Moreover, in the above embodiment, the pit readout light is synthesized with the reference light and the information light, and is applied to the recording medium. The present invention, however, may be adopted to an information reproducing/recoding device using, for example, a recording medium to which the pit readout light is applied from an opposite surface of a surface to which the reference light and the information light are applied. Further, the present invention may be adopted to an information reproducing device performing only reproduction of the information light. In the above description, the application position of the reference light is adjusted when the information recording/reproducing device is manufactured. However, this is not exclusive. The application position of the reference light may be adjusted whenever the information light is reproduced. In this case, it is possible to reproduce the information light from the recording medium 11 in which the interference fringes are recoded by an information recording/reproducing device having no reproduction compatibility.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. An information recording/reproducing device (10) comprising:
a first light-source unit for emitting light (25);
a spatial light modulator (27) for modulating the light of said first light-source unit every pixel, said spatial light modulator having an image forming surface (27a) on which two-dimensional pattern images including pattern images for information light and reference light are formed, and the light of the first light-source unit being modulated on the basis of the formed pattern images;
a recorder (34) for recording interference fringes in a recording medium (11), said interference fringes being caused by condensing the coaxial information light and reference light produced from said pattern images and by making the information light and the reference light interfere with each other;
a reproducer (34) for reproducing the information light by applying the reference light based on the pattern image thereof, which is formed on the image forming surface of said spatial light modulator, to either one of the interference fringes, one of which is recorded by said recorder and the other of which is recorded by another information recording/reproducing device,
a reproduction pattern-image detector (38) for detecting the reproduced information light as a reproduction pattern image; and
an adjuster (46) for adjusting an application position of the reference light relative to said recording medium by changing a position of the pattern image of the reference light, which is formed on said image forming surface, on the basis of contrast of the reproduction pattern image detected by said reproduction pattern-image detector.

2. The information recording/reproducing device according to claim 1, wherein said recorder changes a position of the pattern image of the information light in accordance with the position of the pattern image of the reference light changed by said adjuster.

3. The information recording/reproducing device according to claim 1, wherein said spatial light modulator is a micromirror device in which mirror elements are arrange on said image forming surface in matrix, and said mirror element composes the pixel forming said pattern image.

4. The information recording/reproducing device according to claim 3, wherein said micromirror device controls an inclination of said mirror element in accordance with said pattern image.

5. The information recording/reproducing device according to claim 1, wherein said reproduction pattern-image detector is a CMOS image sensor.

6. The information recording/reproducing device according to claim 1, further comprising:
a second light-source unit (41) for emitting light having a wavelength different from that of said first light-source unit, the light of said second light-source unit being used for reading a pit (16) formed in said recording medium and for detecting a recording position of said interference fringe.

7. The information recording/reproducing device according to claim 6, wherein said first light-source unit includes a first laser source for emitting green laser beams, and said second light-source unit includes a second laser source for emitting red laser beams.

8. An information reproducing method in which light obtained from a light source (25) is modulated every pixel on the basis of two-dimensional pattern images formed on an image forming surface (27a) and including pattern images for information light and reference light, and the coaxial information light and reference light produced from said pattern images are condensed to record interference fringes, which are caused by making the information light and the reference light interfere with each other, in a recording medium (11), the information light being reproduced from said interference fringe by applying the reference light to said recording medium, said information reproducing method comprising the steps of:
detecting the reproduced information light as a reproduction pattern image;
changing a position of the pattern image of said reference light formed on said image forming surface, on the basis of contrast of said reproduction pattern image; and
adjusting an application position of the reference light relative to said recording medium.

9. The information reproducing method according to claim 8, further comprising the step of:
changing a position of the pattern image of the information light in accordance with the changed position of the pattern image of the reference light.

10. The information reproducing method according to claim 8, wherein the light of said light source is modulated by a micromirror device (27) in which mirror elements are arranged on said image forming surface in matrix.

11. The information reproducing method according to claim 10, wherein the reproduced information light is detected by a CMOS image sensor (38).

12. The information reproducing method according to claim 11, wherein said CMOS image sensor is connected to a reproduction pattern-image analyzer (39) for calculating the contrast of said reproduction pattern image, and the position of the pattern image of said reference light is changed when the contrast calculated by said reproduction pattern-image analyzer is inadequate for a prescribed level.
